Europäisches Patentamt

European Patent Office

Office européen des brevets

(11) Numéro de publication : **0 359 644 B1**

## (12) FASCICULE DE BREVET EUROPEEN

(45) Date de publication du fascicule du brevet :
**02.12.92 Bulletin 92/49**

(21) Numéro de dépôt : **89402466.0**

(22) Date de dépôt : **11.09.89**

(51) Int. Cl.⁵ : **B62D 33/04**, B62D 31/02,
B62D 27/02

(54) **Dispositif pour l'assemblage de l'enveloppe ou carrosserie de véhicules automobiles.**

(30) Priorité : **15.09.88 FR 8812006**

(43) Date de publication de la demande :
**21.03.90 Bulletin 90/12**

(45) Mention de la délivrance du brevet :
**02.12.92 Bulletin 92/49**

(84) Etats contractants désignés :
**AT BE CH DE ES FR GB IT LI LU NL**

(56) Documents cités :
**EP-A- 0 309 358**
**WO-A-85/05337**
**DE-U- 1 710 008**

(56) Documents cités :
**FR-A- 2 501 309**
**GB-A- 1 030 114**
**US-A- 3 388 944**
**US-A- 3 981 107**

(73) Titulaire : **SOCIETE FRANCAISE DE
CARROSSERIE GANGLOFF SARL
160 rue du Ladhof
F-68000 Colmar (FR)**

(72) Inventeur : **Horlacher, Rolf
16 rue de Verdun
F-68000 Colmar (FR)**

(74) Mandataire : **Lachat, Salomé
70, rue Fondary
75015 Paris (FR)**

Jouve, 18, rue Saint-Denis, 75001 PARIS

## Description

La présente invention est relative à un dispositif pour l'assemblage de l'enveloppe ou carrosserie de véhicules automobiles à châssis, en particulier de cars, selon les caractéristiques du préambule de la revendication 1, connue du document DE-U-1710008.

La construction de cars est traditionnellement réalisée à partir d'une ossature en profils de tubes d'acier ou d'aluminium, se composant notamment de plusieurs longerons supérieurs et inférieurs, courant sur toute la longueur du véhicule, et d'arceaux, assemblés avec les longerons, en étant disposés à une certaine distance l'un de l'autre. Sur cette ossature sont montés les différents éléments composant l'enveloppe ou carrosserie du car dont notamment le pavillon, les panneaux latéraux, les peaux bas de caisse, les glaces.

Le montage de ces différents éléments définissant l'habitacle est assuré, selon les modes de construction connus, par des profils complémentaires, fixés par vis ou agrafes, clips, ou autres moyens similaires, sur les éléments constitutifs de l'ossature. A cet effet, il est nécessaire de percer des trous dans les éléments de l'ossature, notamment dans les longerons supérieurs et inférieurs des faces latérales. Les trous sont prévus à une distance d'environ 10 à 15 cm les uns des autres et répartis sur toute la longueur du car, qui est couramment d'une douzaine de mètres. Les jointures, notamment longitudinales, entre les différents éléments de l'enveloppe, et plus particulièrement, celles entre le pavillon et les glaces, et, celles entre les glaces latérales et les panneaux latéraux, sont cachées par des moulures, enjoliveurs, couvre-joints, galons... La phase de montage du car est nécessairement suivie d'une phase spécifique de finition de la carrosserie en raison de la pose des différents éléments destinés à recouvrir les jointures. Cette phase de finition a généralement lieu après peinture de la carrosserie avec le risque de rayure que cela comporte.

Ce type de montage traditionnel présente de très sérieux inconvénients dus essentiellement à la nécessité du perçage de très nombreux trous. Il y a un risque considérable d'infiltration d'eau et d'oxydation, réduisant la durée de vie du car. De plus, comme il faut pour de très nombreux trous procéder à un vissage précis, le risque de mauvais positionnement des moyens de fixation est très élévé. Le montage des glaces latérales implique la présence d'au moins un longeron supérieur disposé sous la partie arrondie du pavillon, ce qui limite sensiblement la hauteur des glaces latérales.

Il est connu depuis le brevet français FR-A7-2501309 d'utiliser des profilés pour l'assemblage de panneaux en vue de la réalisation de caisses utilisables comme carrosseries de véhicules mais se compose de plusieurs éléments s'enclipsant les uns dans les autres pour arriver au maintien de surfaces horizontales ou verticales d'épaisseur variable. Dans cette vue, il est proposé un dispositif prévoyant l'utilisation de deux rainures courant sur toute la longueur du profilé dans lesquelles s'engagent les clés adaptées à l'épaisseur du panneau à retenir. De plus, des rivets viennent bloquer la clef en traversant le panneau à retenir et le profil. Autrement dit, la conformation du profil ne répond pas aux impératifs d'étanchéité et de fixation sans rivetage imposés par une construction efficace.

Le brevet WO-A-8505337 est relatif à un dispositif de rattapage de jeu lors d'un assemblage de panneaux d'épaisseurs variables du fait de tolérances de fabrication. Dans cette vue, les panneaux sont maintenus plaqués à leur périphérie sur une branche d'un profil par une contre-plaque, elle-même rendue solidaire du profil par un assemblage composé d'un écrou prisonnier d'une gorge dudit profil et d'une vis. Ainsi, le maintien des panneaux n'est pas assuré par la conformation particulière du profil mais par vissage et serrage sur un écrou prisonnier.

Le brevet US-A-3981107 n'antériorise pas non plus la présente invention. Il présente un assemblage de plusieurs profilés pour maintenir des panneaux qui sont fixés par vissage transperçant sur le profilé. Il n'est pas question d'engagement des panneaux dans un profilé mais d'utiliser un profilé comme écarteur de deux panneaux. En outre, cet écarteur est solidarisé par des vis sur un autre profil.

Le brevet GB-A-1030114 qui est uniquement cité au titre de l'arrière plan technologique propose également un dispositif d'assemblage selon lequel des panneaux sont fixés par rivetage transperçant sur un profilé dans lequel viennent s'enchâsser des poinçons et des poutres. Les panneaux sont fixés tant sur le profil que sur les poinçons et poutres.

Par suite, la présente invention a pour objet un dispositif permettant une grande simplification et accélération de la fabrication, du montage, de l'enveloppe ou carrosserie de véhicules automobiles tels que des cars, en procédant à des opérations de finition simultanément à l'opération de montage proprement dite. L'invention a également pour objet de limiter le nombre de trous à percer, d'assemblages à réaliser. Ainsi les risques d'infiltration d'eau et d'oxydation sont restreints. Le coût est réduit grâce à une économie de main d'oeuvre, d'énergie et de matières premières.

Pour atteindre ces objectifs, la présente invention propose un dispositif conforme à la partie caractérisante de la revendication 1, savoir, d'une part, un profil supérieur, fixé sur les arceaux dans la zone de raccordement de leurs parties horizontale et verticale, constitué d'une partie centrale arrondie prolongée à l'une de ces extrémités par une fourche à deux branches, de préférence de longueurs inégales, entre lesquelles sont insérées les parties de carrosserie, la branche extérieure étant plus courte que la branche intérieure, et à son extrémité par un étagement rentrant formant jet d'eau, lui-même prolongé par une partie repliée en crochet, la fourche et le crochet étant ouverts en sens opposés, et, d'autre part un profil intérieur sensiblement plan, constitué d'une partie centrale plane, pouvant être pourvue de raidisseurs et comportant à l'une de ses extrémités un rebord en U ouvert vers l'autre extrémité, et, dans la zone de son autre extrémité, une double fourche.

Les revendications subordonnées 2 à 10 proposent des détails et des modes de réalisation de l'invention particulièrement avantageux.

L'utilisation du dispositif conforme à l'invention permet de remplacer les revêtements en tôle d'acier par des profils en aluminium, des panneaux thermoformés, et du polyester stratifié. Ces différents revêtements, à l'inverse des revêtements à base de fer, résistent particulièrement bien à l'oxydation, ce qui accroît d'autant la durée d'usage du car. Le dispositif conforme à l'invention conduit, en outre, à un allègement de l'ossature. De plus, l'utilisation d'un pavillon en polyester stratifié contribue à abaisser le centre de gravité du car tout en assurant une bonne isolation thermique. Enfin, le dispositif conforme à l'invention garantit la planéité absolue des faces latérales, ce qui contribue à un renouvellement de la ligne.

Un dispositif pour l'assemblage de l'enveloppe ou carrosserie de véhicules automobiles tels que des cars, conforme à l'invention, sera décrit de façon purement indicative à l'aide des dessins annexés à titre d'exemple non limitatif.

Les figures 1a et 1b sont des coupes transversales de deux variantes de réalisation d'un profil supérieur conforme à l'invention.

Les figures 2a à 2b sont des coupes transversales de deux variantes de réalisation d'un profil inférieur conforme à l'invention.

La figure 3 est une coupe transversale de deux profils inférieurs, assemblés symétriquement, l'un étant destiné au maintien inférieur de glaces latérales, l'autre au maintien de la peau de bas de caisse.

L'on trouvera in fine une nomenclature des différents repères utilisés au cours de la description.

Un dispositif pour l'assemblage de l'enveloppe ou carrosserie de véhicules automobiles à châssis tels que des cars, comprend au moins deux types de profils (1) et (2) de conformation particulière. Ces profils, d'un seul tenant sur sensiblement toute la longueur du véhicule, sont fixés sur les arceaux ou longerons (54) de l'ossature solidaire du châssis. Les parties composant l'enveloppe ou carrosserie du véhicule, savoir notamment le pavillon (12), les glaces latérales (11), les panneaux latéraux, la peau de bas de caisse (46), sont engagées et fixées dans les profils (1) et (2).

L'utilisation de profils conformes à l'invention permet un montage par engagement, collage, bourrage ou pincement d'un insert élastique, des parties de l'enveloppe dans les profils qui sont fixés sur les arceaux ou longerons avec un pas de fixation nettement supérieur à celui des solutions traditionnelles. On évite ainsi l'utilisation de profils complémentaires pour le maintien des glaces, pavillons, panneaux latéraux et peaux de bas de caisse. Grâce au dispositif conforme à l'invention, on supprime 90 % des trous percés à l'occasion d'un montage traditionnel. Ceci est d'importance car les trous peuvent être mal positionnés ou être à l'origine d'infiltration d'eau et d'oxydation. Selon l'invention, par contre, les perçages de trous encore nécessaires sont placés en dehors des zones d'infiltration possibles car en dessous des recouvrements ou parties d'enveloppe, sans liaison avec l'extérieur de l'habitacle soumis aux intempéries.

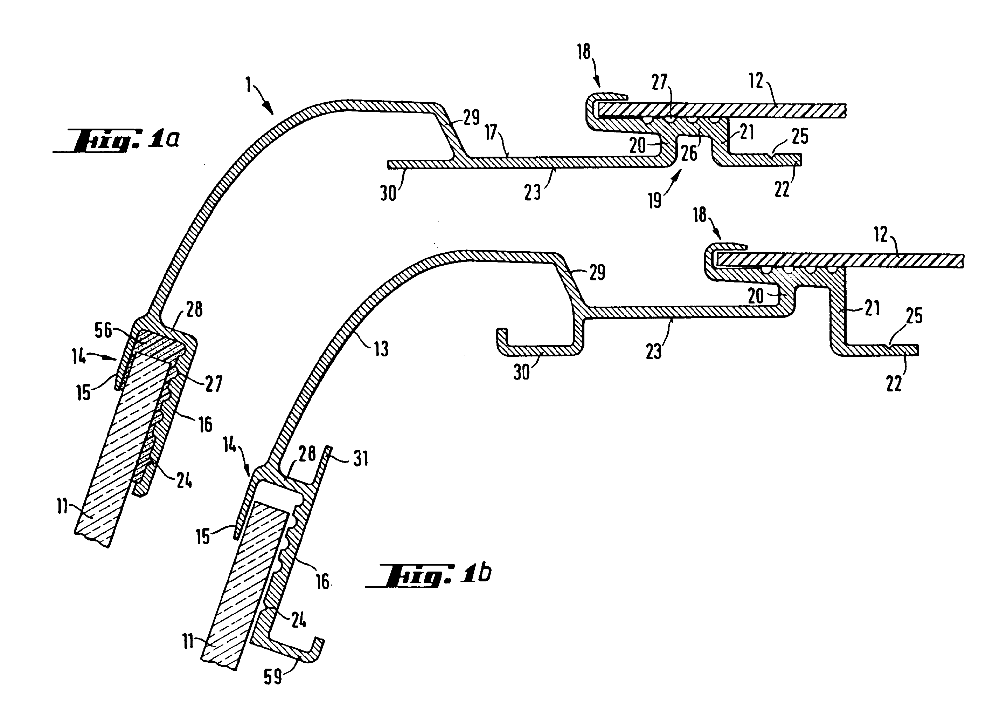

Les figures 1a et 1b montrent une coupe transversale de deux variantes de réalisation d'un profil supérieur (1) qui peut être fixé sur des arceaux ou longerons, non représentés sur le dessin, dans la zone de raccordement de ses parties horizontale et verticale grâce à des moyens de fixation, par exemple vissés dans l'entaille (24), servant de repère de perçage, de la branche (16) de la fourche (14), respectivement dans l'entaille (25) de la patte (22).

Les deux profils supérieurs (1), disposés de part et d'autre du car, se composent d'une partie centrale arrondie (13) prolongée à l'une de ses extrémités par une fourche (14) à deux branches (15) et (16). Entre lesdites branches (15) et (16) sont engagées les glaces latérales (11) pour y être fixées par exemple par collage, bourrage ou pincement d'un insert élastique comme connu en soi. La branche extérieure (15) de la fourche (14) est de préférence plus courte que la branche intérieure (16). A son autre extrémité, la partie centrale arrondie (13) du profil (1) comporte un étagement rentrant (17) formant jet d'eau, lui-même prolongé par une partie repliée en crochet (18). Le crochet (18) et la fourche (14) sont ouverts en sens opposés. Dans les crochets (18) des deux profils supérieurs (1) est engagé le pavillon (12) pour y être fixé par tout moyen connu en soi. Selon l'invention, l'étagement rentrant (17) formant jet d'eau n'est percé d'aucun trou de fixation ce qui élimine tout risque d'infiltration d'eau et d'oxydation.

Plus précisément, la partie repliée en crochet (18), destiné au maintien du pavillon (12) est disposée sur un étagement saillant (19) dont un côté (20) est commun à l'étagement rentrant (17) formant jet d'eau. L'autre côté (21) de l'étagement (19) se raccorde à une patte (22), située de préférence au même niveau que le fond (23) de l'étagement rentrant (17) formant jet d'eau.

La branche intérieure (16) de la foruche (14) et la patte (22), prolongeant l'étagement saillant (19), sont pourvues, dans leur zone d'extémité d'une entaille (24), (25), courant sur toute la longueur du profil, destinée à servir de repère de perçage et à recevoir les moyens de fixation, plus particulièrement des vis, du profil sur les arceaux ou longerons de l'ossature solidaire du châssis. Comme indiqué précédemment, cette fixation par vis est placée en dehors de zones possibles d'infiltration, c'est-à-dire dans l'habitacle, hors d'eau, à l'intérieur de l'enveloppe ou carrosserie. Les entailles (24), (25) ont pour objet un guidage dans une dimension de la tête de vis. La liberté de positionnement de la vis par le monteur est ainsi limitée, ce qui évite des risques d'erreur comme des pertes de temps.

Selon une autre caractéristique de l'invention, la branche intérieure (16) de la fourche (14) et la partie du crochet (18) faisant corps avec le fond (26) de l'étagement saillant (19) sont avantageusement pourvues de rainures (27) pour joint de mastic. Celles-ci courent sur toute la longueur du profil (1) et sont destinées à faciliter la fixation, par exemple par collage, du pavillon (12) et des glaces latérales (11).

Les côtés (20) et (21) de l'étagement saillant (19), la base (28) de la fourche (14) et le côté (29) de l'étagement rentrant (17) forment des voiles de raisissement radiaux du profil (1). Des voiles de raidissement axiaux sont constitués par la patte (22), prolongeant l'étagement saillant (19) vers le plan médian longitudinal du véhicule, et le prolongement (30) du fond (23) de l'étagement rentrant (17). Selon le mode de réalisation montré à la figure 1a, la patte (22) et le prolongement (30) sont situés sensiblement dans le plan du fond (23) de l'étagement rentrant (17), alors qu'ils sont situés en dessous du plan du fond (23) conformément au mode de réalisation montré à la figure 1b. Selon ce dernier mode de réalisation, le prolongement (30) est recourbé à son extrémité et peut servir notamment de chemin de câble électrique. La branche inférieure (16) de la fourche (14) possède un prolongement (31) formant également un voile de raidissement axial. L'extémité de la branche (16) peut être recourbée vers l'intérieur du véhicule pour former une lèvre de fixation (59) de la garniture intérieure ou servir notamment de chemin de câble électrique.

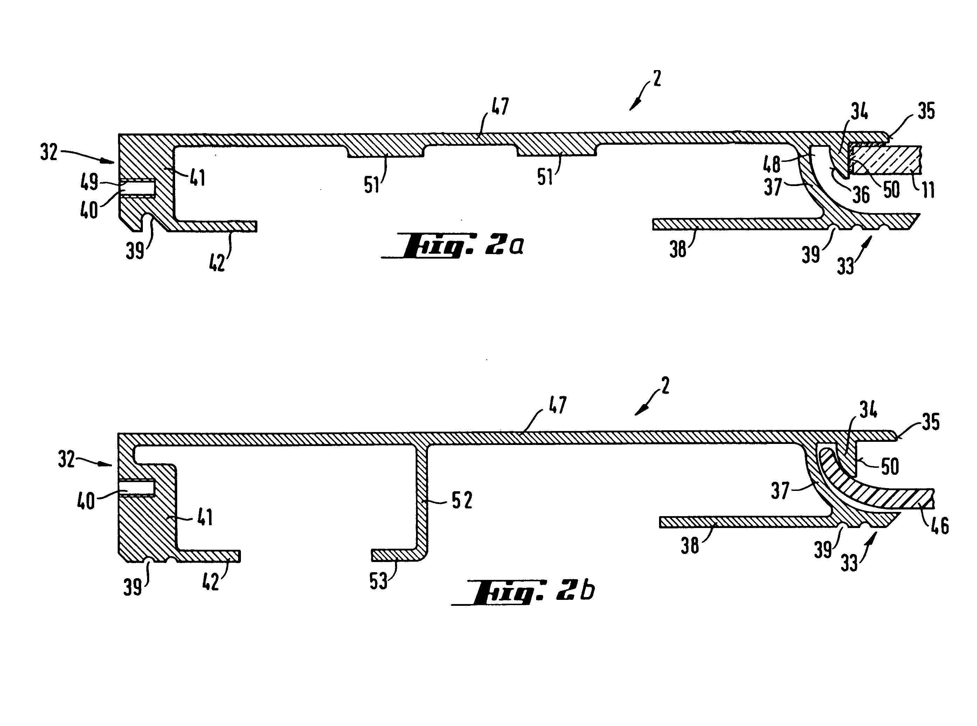

Les figures 2a et 2b montrent une coupe transversalle de deux variantes de réalisation d'un profil inférieur (2). Comme on peut le voir sur les figures, le profil (2) est constitué d'une partie centrale (47) sensiblement plane, et comporte à l'une de ses extrémités un rebord (32) en **U**, ouvert vers l'autre extrémité, et, dans la zone de son autre extrémité, une double fourche (33).

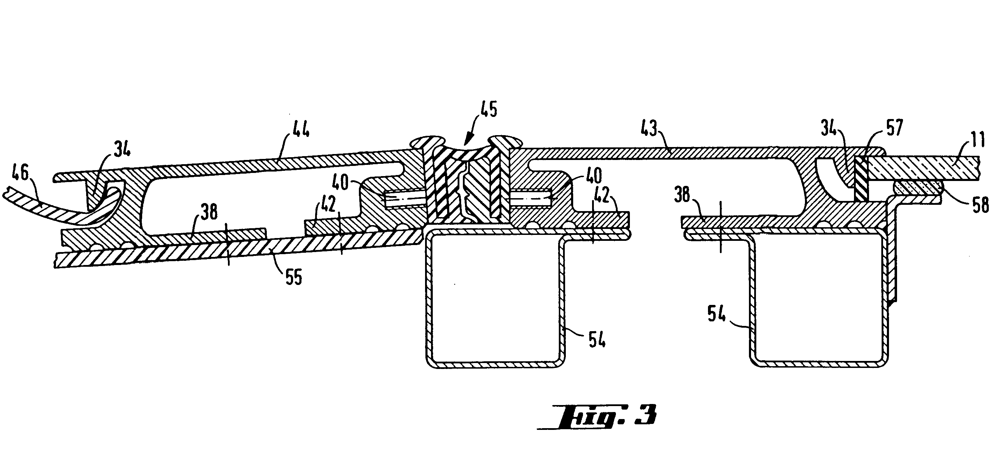

La double fourche (33) du profil (2) se compose, d'une part, d'une saillie intérieure (34) située à une certaine distance en dessous de l'arête (35) de la partie centrale plane (47), la face inférieure (36) de ladite saillie étant arrondie, et, la face supérieure (50) étant plane et sensiblement orthogonale à la partie centrale (47). La face (50) sert de surface d'appui au chant de parties de l'enveloppe ou carrosserie du véhicule, plus particulièrement aux glaces (11) et, éventuellement, aux panneaux latéraux, lorsque le profil (2) est utilisé comme profil haut de deux profils inférieurs (2) superposés symétriquement pour constituer des faces latérales comme on peut le voir à la figure 3.

La double fourche (33) du profil (2) se compose, d'autre part, d'une branche arrondie (37), disposée en dessous et autour de la saillie intérieure (34) pour former une gorge de réception (48) de parties de carrosserie courant sur toute la longueur du profil. La saillie intérieure se prolonge par une branche droite (38), orientée vers l'autre extrémité du profil, sensiblement parallèle à la partie centrale plane (47). Sur la face extérieure de la branche droite (38) peuvent être prévues des rainures (39) courant sur toute la longueur du profil.

Dans la gorge de réception (48) sont engagées pour y être fixées par collage, des parties de l'enveloppe ou carrosserie du véhicule. Il s'agit notamment de la peau de bas de caisse (46) lorsque le profil (2) est utilisé comme profil bas de deux profils (2) superposés symétriquement pour constituer les faces latérales d'un car.

A son autre extrémité, le profil (2) comporte un rebord (32) en **U**. Dans la base (41) dudit rebord (32) est ménagée une gorge (40), ouverte vers l'extérieur, dont les parois latérales sont pourvues d'un filetage (49). La branche (42) du rebord (32) en **U** est sensiblement parallèle à la partie centrale (47) du profil (2) et peut comporter une rainure (39) pour la réception d'un joint de mastic, courant sur toute la longueur du profil. La gorge de fixation (40) est destinée à recevoir des moyens de fixation en vue de permettre l'assemblage symétrique de deux profils (2) superposés pour constituer les faces latérales d'un car comme montré à la figure 3. La branche (42) du rebord (32) en **U** est de préférence située dans le même plan que la branche (38) droite de la double fourche (33).

La partie centrale plane (47) du profil (2) peut être pourvue de raidisseurs (51), (52) courant sur toute la longueur du profil. Les raidisseurs (51) conformes au mode de réalisation montré à la figure 2a sont formés par des surépaisseurs orientées vers l'intérieur alors que le raidisseur (52), conforme au mode de réalisation montré à la figure 2b, est formé par une branche (52), orientée vers l'intérieur, dont l'extrémité libre (53) est recourbée vers le rebord (32) en **U** pour constituer une branche d'appui à une garniture intérieure.

Les profils (1) et (2) sont fixés par au moins l'une des parties (22), (30), (31), (38), (53) sur les arceaux ou longerons (54) composant l'ossature du véhicule. Ces parties peuvent servir également à la fixation de la garniture intérieure du véhicule.

La figure 3 est une coupe transversale de deux profils inférieurs (2) assemblés symétriquement pour former la paroi latérale d'un car. Le profil inférieur haut (43) est destiné notamment au maintien inférieur des glaces latérales (11), le profil inférieur bas (44) étant plus particulièrement destiné au maintien de la peau de bas de caisse (46). Comme montré à la figure 3, les glaces latérales (11) reposent par leur chant sur la face supérieure plane (50) de la saillie intérieure (34) du profil inférieur haut (43) par l'intermediaire d'un bourrelet élastique (57) et sont collées latéralement par une masse de colle (58). Selon le mode de réalisation montré à la figure 3, les deux profils inférieurs (43) et (44) sont assemblés par une charnière (45), ce qui permet l'utilisation du profil inférieur bas (44) comme porte, notamment de coffre à bagage. Les deux profils inférieurs (43) et (44) peuvent être assemblés également par des moyens de fixation rigides non représentés sur le dessin et connus en soi.

Selon un mode préférentiel de réalisation de l'invention, une enveloppe ou carrosserie de véhicule automobile utilisant le dispositif précédemment décrit se compose essentiellement des parties suivantes :

- un pavillon (12) qui est engagé de part et d'autre et collé dans les crochets (18) de deux profils supérieurs (1), formant arrondi de pavillon, disposé symétriquement dans la partie supérieure des arceaux de l'ossature,

- de glaces latérales (11) ou panneaux latéraux qui, d'une part, sont engagés et fixés dans la fourche (14) du profil supérieur (1) et qui, d'autre part, s'appuient sur la face supérieure plane (50) de la saillie (34) d'extrémité d'un premier profil inférieur (43),

- un second profil inférieur (44), disposé symétriquement en dessous du premier profil inférieur (43), assemblé avec ce dernier soit par des moyens de fixation rigides, soit par une charnière (45), les moyens de fixation rigides ou la charnière (45) étant fixés à l'aide de gorges de fixation (40) ménagées dans les rebords (32) en **U** des deux profils inférieurs (43), (44) se faisant symétriquement face,

- une peau de bas de caisse (46) qui est engagée et fixée dans la gorge (48), formée par la saillie (34) et la branche arrondie (37), du second profil inférieur (44).

Les surfaces extérieures des profils (1) et (2) peuvent être peintes ou servir de support à tout revêtement approprié. Les surfaces intérieures recoivent une garniture recouvrant des isolants thermiques ou phoniques comme connu en soi.

## Nomenclature

1.      profil supérieur formant arrondi de pavillon
2.      profil inférieur
11.     glace
12.     pavillon
13.     partie centrale arrondie
14.     fourche
15.     branche intérieure de la fourche
16.     branche extérieure de la fourche
17.     étagement rentrant formant jet d'eau
18.     partie repliée en crochet
19.     étagement saillant
20.     côté de l'étagement (19) ou voile de raidissement radial
21.     côté de l'étagement (19) ou voile de raidissement radial
22.     patte formant voile de raidissement pour la fixation sur ossature
23.     fond de l'étagement (17)
24.     entaille de la fourche (repère de perçage)
25.     entaille de la patte (repère de perçage)
26.     fond de l'étagement (19)
27.     rainures pour joint de mastic
28.     base de la fourche ou voile de raidissement radial
29.     côté de l'étagement (17) ou voile de raidissement radial
30.     prolongement ou voile de raidissement axial (chemin de câble)
31.     prolongement de la branche (16) ou voile de raidissement axial
32.     rebord en **U** du profil (2)
33.     double fourche
34.     saillie intérieure
35.     arête de (47)
36.     face inférieure arrondie de la saillie (34)
37.     branche arrondie
38.     branche droite de la double fourche (33)
39.     rainures pour joint de mastic
40.     gorge de fixation dans le rebord (32) en **U**
41.     base du rebord (32) en **U**
42.     branche du rebord (32) en **U**
43.     profil inférieur haut
44.     profil inférieur bas
45.     charnière
46.     peau de bas de caisse
47.     partie centrale plane du profil (2)
48.     gorge dans la double fourche (33)
49.     filetage des parois latérales de la gorge de fixation (40)
50.     face supérieure plane de la saillie (34)
51.     raidisseur
52.     raidisseur
53.     branche d'appui
54.     longeron
55.     garniture intérieure
56.     masse de colle
57.     bourrelet élastique
58.     masse de colle
59.     lèvre de fixation de la garniture intérieure

## Revendications

1.      Dispositif pour l'assemblage de l'enveloppe ou carrosserie de véhicules automobiles à châssis, en particulier de cars, constitue d'au moins deux profils (1, 2) de conformation particulière, fixes sur les arceaux ou longerons (54) de l'ossature solidaire du châssis, d'un seul tenant sur sensiblement toute la longueur du véhicule, dans lesquels sont engagées et fixées sans perforation des parties de l'enveloppe ou carrosserie (11, 12, 46), plus particulièrement, les glaces, le pavillon, les panneaux latéraux et de bas de caisse, *caractérisé par*

 - un profil supérieur (1), fixé sur les arceaux dans la zone de raccordement de leurs parties horizontale et verticale, constitué d'une partie centrale (13) arrondie prolongée à l'une des extrémités par une fourche (14) à deux branches (15, 16), de préférence de longueurs inégales, entre lesquelles sont insérées les parties de carrosserie, la branche extérieure (15) étant plus courte que la branche intérieure (16), et à son autre extrémité par un étagement rentrant (17) formant jet d'eau, lui-même prolongé par une partie repliée en crochet (18), la fourche (14) et le crochet (18) étant ouverts en sens opposés,

 - un profil inférieur (2) sensiblement plan, constitué d'une partie centrale (47) plane, pouvant être pourvue de raidisseurs (51, 52) et comportant à l'une de ses extrémités un rebord (32) en U ouvert vers l'autre extrémité, et, dans la zone de son autre extrémité, une double fourche (33).

**2.** Dispositif selon la revendication 1 *caractérisé en ce que* la partie repliée en crochet (18) est disposée sur un étagement saillant (19) dont un côté (20) est commun à l'étagement rentrant (17) formant jet d'eau, l'autre côté (21) se raccordant à une patte (22) située de préférence au même niveau que le fond (23) de l'étagement rentrant (17) formant jet d'eau.

**3.** Dispositif selon les revendications 1 et 2 *caractérisé en ce que* la branche intérieure (16) de la fourche (14) et la patte (22) prolongeant l'étagement saillant (19) du crochet (18) sont pourvues dans leur zone d'extrémité d'une entaille (24, 25), courant sur toute la longueur du profil (1), utilisée comme repère de perçage et destinée à recevoir les moyens de fixation du profil (1) sur les arceaux de l'ossature solidaire du châssis.

**4.** Dispositif selon les revendications 1 et 2 *caractérisé en ce que* la branche intérieure (16) de la fourche (14) et la partie du crochet (18) faisant corps avec le fond (26) de l'étagement saillant (19) sont pourvues de rainures (27), courant sur toute la longueur du profil (1), pour faciliter la fixation par collage ou bourrage, comme connu en soi, de parties de carrosserie.

**5.** Dispositif selon la revendication 1 *caractérisé par* des voiles de raidissement, courant sur toute la longueur du profil, radiaux (20, 21, 28, 29), formant notamment les côtés des étagements (20, 21, 29) et la base (28) de la fourche, et axiaux (22, 30, 31), notamment (22, 30) dans le plan du fond (23) de l'étagement (17) formant jet d'eau, et (31) dans le prolongement de la branche intérieure (16) de la fourche (14).

**6.** Dispositif selon la revendication 1 *caractérisé en ce que* la double fourche (33) prévue à l'une des extrémités de la partie centrale (47) du profil (2) est constituée, d'une part, d'une saillie intérieure (34), située à une certaine distance en dessous de l'arête (35) de la partie centrale plane (47) du profil (2), dont la face inférieure (36) est arrondie, dont la face supérieure (50) plane d'appui du chant de parties de carrosserie est sensiblement orthogonale à la partie centrale plane (47) du profil (2), et, d'autre part, d'une branche arrondie (37), disposée en dessous et autour de la saillie intérieure (34) pour former une gorge de réception (48) de parties de carrosserie, courant sur toute la longueur du profil (2), qui se prolonge par une branche droite (38), orientée vers l'autre extrémité du profil, sensiblement parallèle à la partie centrale plane (47) du profil (2), et sur la face extérieure de laquelle sont prévues des rainures (39), courant sur toute la longueur du profil (2).

**7.** Dispositif selon la revendication 1 *caractérisé par* une gorge de fixation (40), ouverte vers l'extérieur, ménagée dans la base (41) du rebord (32) replié en **U**, dont les parois latérales sont pourvues d'un filetage (49), destinée à recevoir des moyens de fixation, et par une branche (42) du rebord en **U**, sensiblement parallèle à la partie centrale plane (47) du profil (2).

**8.** Dispositif selon l'une des revendications précédentes *caractérisé en ce que* au moins l'une des parties (22, 30, 31, 38, 53) est fixée sur les arceaux ou longerons (54) de l'ossature solidaire du châssis ou supporte une garniture intérieure (55).

**9.** Dispositif selon l'une des revendications précédentes *caractérisé en ce que* les profils supérieurs (1) et les profils inférieurs (2) constituent une partie du revêtement extérieur du véhicule, l'enveloppe complète comprenant en outre le pavillon (12), les glaces latérales (11), des panneaux latéraux, la peau de bas de caisse (46).

**10.** Enveloppe ou carrosserie de véhicules automobiles, utilisant un dispositif conforme aux revendications précédentes, *caractérisé en ce que*:

 - le pavillon (12) est engagé et collé latéralement dans les crochets (18) de deux profils supérieurs (1), disposés symétriquement dans la partie supérieure des arceaux de l'ossature solidaire du châssis,

- les glaces latérales (11) ou panneaux latéraux sont engagés et fixés, d'une part, dans la fourche (14) du profil supérieur (1), et s'appuient, d'autre part, sur la face supérieure plane (50) de la saillie (34) d'extrémité d'un premier profil inférieur (43),

- un second profil inférieur (44) assemblé au premier profil inférieur (43) soit par des moyens de fixations rigides, soit par une charnière (45), les moyens de fixation rigide ou la charnière (45) étant fixés à l'aide des gorges de fixation (40) ménagées dans les rebords (32) en **U** des deux profils inférieurs (43, 44) se faisant symétriquement face,

- une peau de bas de caisse (46) est engagée et fixée dans la gorge (48) formée par la saillie (34) et la branche arrondie (37) du second profil inférieur (44).

**Patentansprüche**

1.  Vorrichtung für den Zusammenbau der Verkleidung oder Karosserie von Kraftfahrzeugen, insbesondere von Bussen, bestehend aus wenigstens zwei Profilen (1), (2) besonderer Gestaltung, welche auf den Spriegeln oder auf den Längsträgern (54) des Fahrgestells befestigt sind, sich annähernd über die gesamte Länge des Fahrzeugs erstrecken und in welchen Teile der Verkleidung oder Karosserie, insbesondere Fensterscheiben, Fahrzeugdach, Seitenwandungen, Karosserieboden (11), (12), (46) eingreifend befestigt sind, wobei für deren Befestigung keine Durchbohrungen erforderlich sind, *gekennzeichnet durch*:

    - ein auf den Spriegeln im Übergangsbereich zwischen derer horizontaler und vertikaler Abschnitte befestigtes Oberprofil (1) mit einem abgerundeten Mittelbereich (13), welcher an seinem einen Ende einen gabelförmigen, die Verkleidungs- oder Karosserieteile zwischen sich aufnehmenden Fortsatz (14) aufweist, wobei die beiden Arme des Fortsatzes (14) vorzugsweise unterschiedlicher Länge sind und der äussere Arm (16) kürzer als der inner Arm (15) ist, und welcher an seinem anderen Ende eine stufenartig nach innen gerichtete, als Wasserrrinne dienende Verlängerung (17) mit einem hakenförmig gebogenen Fortsatz (18) aufweist, wobei der gabelförmige Fortsatz (14) und der hakenförmige Fortsatz (18) in entgegengesetzter Richtung geöffnet sind,

    - ein annähernd flaches, gegebenenfalls mit Versteifungen (52), (53) versehenes Unterprofil (2) mit einem flachen Mittelbereich (47), welcher an seinem einen Ende einen U-förmigen, mit einer nach aussen geöffneten Vertiefung versehenen Flansch (32) und an seinem anderen Ende einen gabelförmigen Fortsatz (33) aufweist.

2.  Vorrichtung nach Anspruch 1 *dadurch gekennzeichnet, daß* der hakenförmig gebogene Fortsatz (18) auf einer vorspringenden, stufenförmigen Verlängerung (19) angeordnet ist, wobei der eine Abschnitt (20) der stufenförmigen Verlängerung (19) gleichzeitig einen Abschnitt der stufenförmigen Verlängerung (17) bildet und deren anderer Abschnitt (21) einen mit dem Grund (23) der stufenförmigen Verlängerung (17) fluchtenden Lappen (22) aufweist.

3.  Vorrichtung nach Anspruch 1 und 2 *dadurch gekennzeichnet, daß* der innere Arm (16) des gabelförmigen Fortsatzes (14) und der Lappen (22) der stufenartigen Verlängerung (19) in ihren Endbereichen eine sich über die gesamte Länge des Profils (1) erstreckende Einkerbung (24), (25), in welcher die Befestigungsmittel zur Befestigung des Profils (1) auf den Spriegeln des Fahrgestells angebracht werden, aufweisen.

4.  Vorrichtung nach Anspruch 1 und 2 *dadurch gekennzeichnet, daß* der innere Arm (16) der gabelförmigen Verlängerung (14) und der Grund (26) der stufenförmigen, den Haken (18) tragenden Verlängerung (19) sich über die gesamte Länge des Profils (1) erstreckende Rinnen (27) zur Erleichterung der Befestigung der Karosserieteile, z.B. durch Kleben, aufweisen.

5.  Vorrichtung nach Anspruch 1 *gekennzeichnet durch* sich über die gesamte Länge des Profils (1) erstreckende Versteifungselemente, deren eine (20), (21), (28), (29) radial ausgerichtet sind und die seitlichen Abschnitte (20), (21), (29) der stufenförmigen Verlängerungen (17), (19) und den Grund (28) des gabelförmigen Fortsatzes (14) bilden, während deren andere (22), (30), (31) axial ausgerichtet und in der gleichen Ebene wie der Grund (23) der stufenförmigen Verlängerung, resp. der innere Arm (16) des gabelförmigen Fortsatzes (14) angeordnet sind.

6.  Vorrichtung nach Anspruch 1 *dadurch gekennzeichnet, daß* der gabelförmige, den Mittelbereich (47) des Profils (2) verlängernde Fortsatz (33) einen nach innen gerichteten, mit Distanz unterhalb der Abschlußkante (35) des flachen Mittelbereichs (47) angeordneten, mit einer abgerundeten Unterseite (36) versehenen Vorsprung aufweist (34), wobei die flache, zur Abstützung der Karosserieteile dienende Oberseite (50) des Vorsprung (34) annähernd senkrecht zum flachen Mittelbereich (47) ausgerichtet ist, *daß* der Mittelbereich (47) des Profils (2) mit einem abgerundeten, unterhalb des Vorsprungs (34) und letzteren umgebend angeordneten Flansch (37) versehen ist, wobei der Flansch (37) und der Vorsprung (34) zwischen sich eine sich über die gesamte Länge des Profils erstreckende Aufnahmenut (48) für die Verkleidungs- oder Karosserieteile einschliessen, und *daß* der Flansch (37) eine gerade, gegen das Profilende gerichtete, zum Mittelbereich (47) des Profils (2) annähernd parallel gerichtete Verlängerung (38) aufweist, wobei auf der Aussenfläche der Verlängerung (38) sich über die gesamte Länge des Profils erstreckende Rillen (39) angeordnet sind.

7.  Vorrichtung nach Anspruch 1 *dadurch gekennzeichnet, daß* im Boden (41) des U-förmigen Flansches (32) eine nach aussen geöffnete Befestigungsrille (40) angeordent ist, wobei die Seitenwandungen der Befestigungsrille mit einem Befestigungsmittel aufnehmenden Innengewinde (49) versehen sind, und *daß* der U-förmige Flansch (32) einen zum flachen Mittelteil (47) des Profils (2) annähernd parallel gerichteten Schenkel (42) aufweist.

8.  Vorrichtung nach einem der vorangehenden Ansprüche 1 bis 7 *dadurch gekennzeichnet, daß* mindestens einer der Teile (22), (30), (31), (38), (53) auf den Spriegeln oder den Längstägern (54) des Fahrgestells befestigt ist und/oder einen Teil der Innenverkleidung (55) des Fahrzeugs abstützt.

9.  Vorrichtung nach einem der vorangehenden Ansprüche 1 bis 8 *dadurch gekennzeichnet, daß* die Ober- (1) und Unterprofile (2) gleichzeitig Teile der Aussenverkleidung oder Karosserie des Fahrzeugs bilden, wobei die gesamte Verkleidung das Fahrzeugdach (12), die Seitenfenster (11), die Seitenwandungen und den Fahrzeugboden (46) umfaßt.

10. Verkleidung oder Karosserie von Kraftfahrzeugen, für welche eine Vorrichtung nach den vorangehenden Ansprüchen angewendet wird, *dadurch,gekennzeichnet, daß*:
    - das Fahrzeugdach (12) in den hakenförmigen Fortsätzen (18) von zwei symmetrisch zueinander im oberen Bereich des Fahrgestells angeordneten Oberprofilen (1) eingreift und z.B. durch Kleben befestigt ist,
    - die Seitenfenster (11) oder Seitenwandungen einerseits in den gabelförmigen Fortsatz (14) des Oberprofils eingreifen und sich andererseits auf die flache Oberseite (50) des im Endbereich eines ersten Unterprofils (43) angeordneten Vorsprungs (34) abstützen,
    - ein zweites Unterprofil (44) mit dem ersten Unterprofil (43) durch starre Elemente oder durch ein Gelenk (45) verbunden ist, wobei die Verbindungsmittel über die im U-förmigen Flansch (32) der beiden Unterprofile (43), (44) vorgesehenen Befestigungsrillen (40) befestigt sind,
    - der Fahrzeugboden (46) in die durch den Vorsprung (34) und den abgerundeten Flansch (37) des Unterprofils (44) gebildete Aufnahmenut (48) eingreift.

## Claims

1.  A device for assembling the shell or bodywork of a motor vehicle having a chassis, in particular a coach, the device being constituted by at least two specially shaped section members (1, 2) fixed to the transversely-extending and longitudinally-extending (54) members of a framework secured to the chassis, extending without interruption over substantially the entire length of the vehicle, and in which portions of the shell or bodywork (11, 12, 46) and more particulary windows, the roof, side panels, and bottom-of-body panels, are engaged and fixed without being perforated, the device being
characterized by:
    a top section member (1) fixed to the transversely-extending framework members where their horizontal and vertical portions meet, and constituted by a rounded central portion (13) extended along one margin by a fork (14) having two prongs (15, 16) preferably of different lengths and between which portions of bodywork are inserted, with the outer prong (15) being shorter than the inner prong (16), and along its other margin by a gutter-forming re-entrant stepped configuration (17) itself extended by a portion folded into a hook (18), the fork (14) and the hook (18) being open in opposite directions; and
    a substantially plane bottom section member (2) constituted by a plane central portion (47) optionally including stiffeners (51, 52) and including along one of its virgins a rim (32) in the form of a U-shape open towards its other margin, and a double fork configuration (33) in the vicinity of its other margin.

2.  A device according to claim 1, characterized in that the portion folded into a hook (18) is disposed on a projecting stepped configuration (19) having one side (20) in common with the gutter-forming re-entrant stepped configuration (17) and having its other side (21) running into a tab (22) preferably situated at the same level as the bottom (23) of the gutter-forming re-entrant stepped configuration (17).

3. A device according to claims 1 and 2, characterized in that the bottom prong (16) of the fork (14) and the tab (22) extending the projecting stepped configuration (19) of the hook (18) are provided in their end zones with respective notches (24, 25) running along the entire length of the section member (1) and used as drilling markers for the purpose of receiving means for fastening the section member (1) to the transversely-extending members of the frame secured to the chassis.

4. A device according to claims 1 and 2, characterized in that the inside prong (16) of the fork (14) and the portion of the hook (18) integral with the top (26) of the projecting stepped configuration (19) are provided with respective grooves (27) running along the entire length of the section member (1) for facilitating fixing of the portions of bodywork by gluing or by packing in a manner known per se.

5. A device according to claim 1, characterized by radial stiffening webs (20, 21, 28, 29) running along the entire length of the section member and forming, in particular, the sides of the stepped configurations (20, 21, 29) and the base (28) of the fork, and axial webs (22, 30, 31) extending along the entire length of the section member, in particular (22, 30) in the plane of the bottom (23) of the gutter-forming stepped configuration (17), and (31) in line with the bottom prong (16) of the fork (14).

6. A device according to claim 1, characterized in that the double-fork (33) provided along one of the margins of the central portion (47) of the section member (2) is constituted firstly by an inward projection (34) situated at a certain distance beneath the edge (35) of the plane central portion (47) of the section member (2) and having a rounded bottom face (36), its top face (50) being plane to provide an abutment for the edges of portions of bodywork and being substantially orthogonal to the plane central portion (47) of the section member (2), and secondly a rounded prong (37) disposed beneath and around the inward projection (34) to form a reception groove (48) for receiving portions of bodywork, running along the entire length of the section member (2) and extended by a straight prong (38) extending towards the other margin of the section member, substantially parallel to the plane central portion (47) of the section member (2) and having grooves (39) running along the entire length of the section member (2) provided in the outside face thereof.

7. A device according to claim 1, characterized by an outwardly open fixing slot (40) formed in the base (41) of the U-shaped rim (32), with the side walls of the slot being threaded (49) to receive fixing means, and by a prong (42) of the U-shaped rim extending substantially parallel to the plane central portion (47) of the section member (2).

8. A device according to any preceding claim, characterized in that at least one of the portions (22, 30, 31, 38, 53) is fixed to the transversely-extending or to the longitudinally-extending members (54) of the framework secured to the chassis or supports an internal lining (55).

9. A device according to any preceding claim, characterized in that the top and bottom section members (1, 2) constitute a portion of the outer covering of the vehicle, with the complete shell further including the roof (12), the side windows (11), the side panels, and the bottom panels (46) of the body.

10. A shell or bodywork for motor vehicles, using a device according to the preceding claims, characterized in that:

the roof (12) is engaged and glued along its sides in the hooks (18) of the two top section members (1) disposed symmetrically on the top portions of the transversely-extending members of the frame secured to the chassis;

side windows (11) or side panels are engaged or fixed firstly in the fork (14) of the top section (1) and secondly are supported on the plane top face (50) of the end projection (34) of a first bottom section member (43);

a second bottom section member (44) assembled to the first bottom section member (43) either by rigid fixing means or else by a hinge (45), the rigid fixing means or the hinge (45) being secured by means of fixing slots (40) formed in the U-shaped rims (32) of the two bottom section members (43, 44) which face each other symmetrically; and

a bottom body panel (46) is engaged and secured in the groove (48) formed by the projection (34) and the rounded branch (37) of the second bottom section member (44).

EP 0 359 644 B1

**Fig. 1a**

**Fig. 1b**

10

**Fig. 2a**

**Fig. 2b**

EP 0 359 644 B1

Fig. 3